(19) Europäisches Patentamt
European Patent Office
Office européen des brevets

(11) **EP 3 579 250 B1**

(12) **EUROPEAN PATENT SPECIFICATION**

(45) Date of publication and mention
of the grant of the patent:
**30.11.2022 Bulletin 2022/48**

(21) Application number: **18820175.0**

(22) Date of filing: **15.06.2018**

(51) International Patent Classification (IPC):
$H01M\ 8/1004$ [(2016.01)]   $H01M\ 8/1018$ [(2016.01)]
$H01M\ 8/10$ [(2016.01)]   $H01B\ 1/12$ [(2006.01)]
$H01M\ 8/24$ [(2016.01)]   $H01M\ 8/18$ [(2006.01)]

(52) Cooperative Patent Classification (CPC):
**H01M 8/188; H01B 1/122; H01M 8/1004;
H01M 8/1018; H01M 8/2459;** H01M 2008/1095;
H01M 2300/0082; Y02E 60/50; Y02P 70/50

(86) International application number:
**PCT/KR2018/006795**

(87) International publication number:
**WO 2018/236094 (27.12.2018 Gazette 2018/52)**

(54) **POLYMER ELECTROLYTE MEMBRANE, ELECTROCHEMICAL CELL AND FLOW CELL EACH COMPRISING SAME, COMPOSITION FOR POLYMER ELECTROLYTE MEMBRANE, AND METHOD FOR PREPARING POLYMER ELECTROLYTE MEMBRANE**

POLYMERELEKTROLYTMEMBRAN, ELEKTROCHEMISCHE ZELLE DAMIT UND DURCHFLUSSZELLE DAMIT, ZUSAMMENSETZUNG FÜR POLYMERELEKTROLYTMEMBRANEN UND VERFAHREN ZUR HERSTELLUNG VON POLYMERELEKTROLYTMEMBRANEN

MEMBRANE ÉLECTROLYTIQUE POLYMÈRE, CELLULE ÉLECTROCHIMIQUE ET CUVE À CIRCULATION LA COMPRENANT, COMPOSITION POUR MEMBRANE ÉLECTROLYTIQUE POLYMÈRE, ET PROCÉDÉ DE PRÉPARATION DE MEMBRANE ÉLECTROLYTIQUE POLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.06.2017 KR 20170077890**

(43) Date of publication of application:
**11.12.2019 Bulletin 2019/50**

(73) Proprietor: **LG Chem, Ltd.
Seoul 07336 (KR)**

(72) Inventors:
• **KIM, Sungyeon**
  **Daejeon 34122 (KR)**
• **NOH, Tae Geun**
  **Daejeon 34122 (KR)**
• **MOON, Sikwon**
  **Daejeon 34122 (KR)**

(74) Representative: **Hoffmann Eitle
Patent- und Rechtsanwälte PartmbB
Arabellastraße 30
81925 München (DE)**

(56) References cited:
JP-A- 2012 169 041   JP-A- 2012 169 041
KR-A- 20140 069 092   KR-A- 20160 120 680
KR-A- 20160 134 067   US-A1- 2014 134 519
US-A1- 2016 013 506   US-A1- 2016 013 506

• YANG XIAOFEI ET AL: "The catalytic effect of bismuth for VO2+/VO2+and V3+/V2+redox couples in vanadium flow batteries", JOURNAL OF ENERGY CHEMISTRY, ELSEVIER, AMSTERDAM, NL, vol. 26, no. 1, 8 November 2016 (2016-11-08), pages 1-7, XP029880305, ISSN: 2095-4956, DOI: 10.1016/J.JECHEM.2016.09.007

EP 3 579 250 B1

## Description

[Technical Field]

The present specification relates to a polymer electrolyte membrane, an electrochemical battery and a flow battery including the same, a composition for a polymer electrolyte membrane, and a method for preparing a polymer electrolyte membrane.

[Background Art]

Power storage technology is an important technology for efficient use over the whole fields of energy such as efficiency of power use, enhancing ability or reliability of power supply systems, expanding introduction of new and renewable energy having large fluctuation depending on time, and energy regeneration of moving bodies, and its potential for development and demands for social contribution have gradually increased.

Studies on secondary batteries have been actively progressed in order for adjusting the balance of demand and supply in semi-autonomous regional power supply systems such as micro-grid, properly distributing non-uniform outputs of new and renewable energy generation such as wind power or solar power generation, and controlling impacts such as voltage and frequency changes occurring from differences with existing power systems, and expectations for the use of secondary batteries have increased in such fields.

When examining properties required for secondary batteries used for high capacity power storage, energy storage density needs to be high, and as high capacity and high efficiency secondary batteries mostly suited for such properties, flow batteries have received most attention.

A flow battery is configured so as to place cathode and anode electrodes on both sides with a separator as a center.

Bipolar plates for electric conduction are each provided outside the electrodes, and the configuration includes a cathode tank and an anode tank holding an electrolyte, an inlet to which the electrolyte goes into, and an outlet from which the electrolyte comes out again.

US 2014 134519 A1 describes an electrolyte membrane for a fuel cell that includes: an inorganic ionic conductor including a trivalent metal element, a pentavalent metal element, phosphorous, and oxygen; and a polymer. The polymer may be selected from a group that includes polymers that possess sulfonate anion groups. The pentavalent metal may be selected from a group of metals including bismuth.

JP 2012 169041 A relates to a solid polymer fuel cell that comprises an electrolyte containing a solid polymer electrolyte and a Bi oxy compound, and uses such an electrolyte as an electrolyte membrane and/or an electrolyte in the catalyst layer. The Bi oxy compound is obtained preferably by: bringing a solution containing Bi ions and/or oxy bismuth ions into contact with the solid polymer electrolyte; ion-exchanging the whole or a part of protons of acid radical of the solid polymer electrolyte with Bi ions or oxy bismuth ions; bringing the solid polymer electrolyte into contact with water or a basic solution; and then precipitating the Bi ions or oxy bismuth ions as a Bi oxy compound.

US 2016 013506 A1 relates to a redox flow battery that performs charging and discharging by supplying a positive electrode electrolyte and a negative electrode electrolyte to a battery cell. The positive electrode electrolyte contains a manganese ion and an additional metal ion, the negative electrode electrolyte contains at least one metal ion selected from a titanium ion, a vanadium ion, a chromium ion, and a zinc ion, and the additional metal ion contained in the positive electrode electrolyte is at least one of an aluminum ion, a cadmium ion, an indium ion, a tin ion, an antimony ion, an iridium ion, a gold ion, a lead ion, a bismuth ion, and a magnesium ion.

[Disclosure]

[Technical Problem]

The present specification is directed to providing a polymer electrolyte membrane, an electrochemical battery and a flow battery including the same, a composition for a polymer electrolyte membrane, and a method for preparing a polymer electrolyte membrane.

[Technical Solution]

One embodiment of the present specification provides a polymer electrolyte membrane including a sulfonate anion ($-SO_3^-$), wherein the sulfonate anion forms an ionic bond with a bismuth cation, wherein a content of the bismuth cation is greater than or equal to 0.2 equivalents and less than or equal to 0.5 equivalents with respect to the sulfonate anion.

Another embodiment of the present specification provides an electrochemical battery including an anode, a cathode, and the polymer electrolyte membrane described above provided between the anode and the cathode.

Another embodiment of the present specification provides a flow battery including an anode in which an anode electrolyte liquid including an anode active material is injected and discharged; a cathode in which a cathode electrolyte liquid including a cathode active material is injected and discharged; and the polymer electrolyte membrane described above disposed between the anode and the cathode.

Another embodiment of the present specification provides a battery module including the flow battery described above as a unit cell.

Another embodiment of the present specification provides a composition for a polymer electrolyte membrane including a bismuth salt, an ion conducting polymer having an ion conducting functional group represented by the following Chemical Formula 1, and a solvent.

[Chemical Formula 1] $-SO_3^-X$

In Chemical Formula 1, X is a cation.

Another embodiment of the present specification provides a method for preparing a polymer electrolyte membrane including preparing a polymer electrolyte membrane using a composition including a bismuth salt, an ion conducting polymer having an ion conducting functional group represented by the following Chemical Formula 1, and a solvent, wherein a content of the bismuth salt is greater than or equal to 4% by weight and less than or equal to 10% by weight based on a total weight of the ion conducting polymer having the ion conducting functional group.

[Chemical Formula 1] $-SO_3^-X$

In Chemical Formula 1, X is a cation.

[Advantageous Effects]

A polymer electrolyte membrane according to the present specification has an advantage of exhibiting favorable ion conductivity.

A polymer electrolyte membrane according to the present specification has an advantage of exhibiting favorable mechanical strength.

A polymer electrolyte membrane according to the present specification has an advantage of preventing a crossover.

[Description of Drawings]

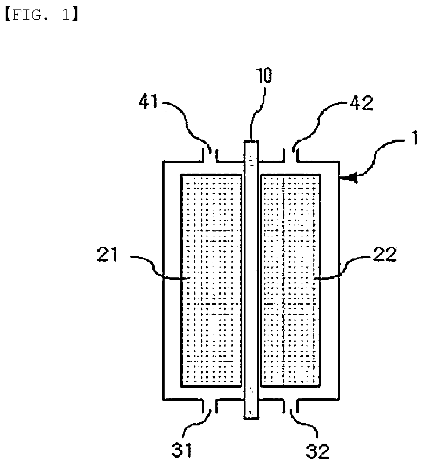

FIG. 1 is a sectional diagram illustrating a general structure of a flow battery.
FIG. 2 is a residual capacity graph of Experimental Example 1.
FIG. 3 is a voltage efficiency graph of Experimental Example 1.
FIG. 4 is a mimetic diagram on a device for measuring vanadium permeability of Experimental Example 2.
FIG. 5 is a graph of vanadium permeability of Experimental Example 2.
FIG. 6 is a solution and state mimetic diagram of Preparation Example 1.
FIG. 7 is a solution and state mimetic diagram of Preparation Example 2.

[Reference Numeral]

1: Housing
10: Separator
21: Anode
22: Cathode
31: Anode Inlet
32: Cathode Inlet
41: Anode Outlet
42: Cathode Outlet

[Mode for Disclosure]

Hereinafter, the present specification will be described in detail.

The present specification provides a polymer electrolyte membrane including a sulfonate anion ($-SO_3^-$), wherein the sulfonate anion forms an ionic bond with a bismuth cation, wherein a content of the bismuth cation is greater than or equal to 0.2 equivalents and less than or equal to 0.5 equivalents with respect to the sulfonate anion.

Any one of the bismuth cations may form cross-linkage by forming an ionic bond with two or more of the sulfonate anions. Specifically, when the bismuth cation is trivalent, the trivalent bismuth cation may form cross-linkage by forming an ionic bond with a maximum of three monovalent sulfonate anions.

With respect to the sulfonate anion, a content of the bismuth cation is greater than or equal to 0.2 equivalents and less than or equal to 0.5 equivalents. As this is the case, the bismuth cation is sufficiently dissociated from the bismuth salt and forms an ionic bond with the sulfonate anion, which leads to an advantage of forming optimal cross-linkage.

Specifically, with respect to the sulfonate anion, a content of the bismuth cation is greater than or equal to 0.2 equivalents and less than or equal to 0.5 equivalents, and it may be less than or equal to 0.4 equivalents, and more specifically it may be greater than or equal to 0.3 equivalents and less than or equal to 0.4 equivalents. Ideally, when forming an ionic bond with one bismuth cation per three sulfonate anions, a content of the bismuth cation is preferably 0.333 equivalents with respect to the sulfonate anion.

The polymer electrolyte membrane may include an ion conducting polymer. The polymer electrolyte membrane may be formed with an ion conducting polymer without a porous body, or may have an ion conducting polymer provided in the pores of a porous body.

The ion conducting polymer is not particularly limited as long as it is a material capable of ion exchange, and those generally used in the art may be used.

The ion conducting polymer may be a hydrocarbon-based polymer, a partial fluorine-based polymer or a fluorine-based polymer.

The hydrocarbon-based polymer may be a hydrocarbon-based sulfonated polymer without a fluorine group, and on the contrary, the fluorine-based polymer may be a sulfonated polymer saturated with a fluorine group, and the partial fluorine-based polymer may be a sulfonated polymer that is not saturated with a fluorine group.

The ion conducting polymer may be one, two or more polymers selected from the group consisting of sulfonated perfluorosulfonic acid-based polymers, sulfonated hydrocarbon-based polymers, sulfonated aromatic sulfone-based polymers, sulfonated aromatic ketone-based polymers, sulfonated polybenzimidazole-based polymers, sulfonated polystyrene-based polymers, sulfonated polyester-based polymers, sulfonated polyimide-based polymers, sulfonated polyvinylidene fluoride-based polymers, sulfonated polyethersulfone-based polymers, sulfonated polyphenylene sulfide-based polymers, sulfonated polyphenylene oxide-based polymers, sulfonated polyphosphazene-based polymers, sulfonated polyethylene naphthalate-based polymers, sulfonated polyester-based polymers, doped polybenzimidazole-based sulfonated polymers, sulfonated polyetherketone-based polymers, sulfonated polyphenyl quinoxaline-based polymers, polysulfone-based polymers, sulfonated polypyrrole-based polymers and sulfonated polyaniline-based polymers. The polymer may be a single copolymer, an alternating copolymer, a random copolymer, a block copolymer, a multiblock copolymer or a graft copolymer, but is not limited thereto.

The ion conducting polymer may be a cation conducting polymer, and examples thereof may include at least one of Nafion, sulfonated polyetheretherketone (sPEEK), sulfonated (polyetherketone) (sPEK), poly(vinylidene fluoride)-graft-poly(styrene sulfonic acid) (PVDF-g-PSSA) and sulfonated poly(fluorenyletherketone).

The porous body is not particularly limited in the porous body structures and materials as long as it includes a number of pores, and those generally used in the art may be used.

For example, the porous body may include at least one of polyimide (PI), Nylon, polyethylene terephthalate (PET), polytetrafluoroethylene (PTFE), polyethylene (PE), polypropylene (PP), poly(arylene ether sulfone) (PAES) and polyetheretherketone (PEEK).

According to one embodiment of the present specification, the polymer electrolyte membrane may include a fluorine-based ion conducting polymer. This has an advantage of having stable chemical resistance.

A thickness of the polymer electrolyte membrane is not particularly limited, but may be, for example, greater than or equal to 5 $\mu$m and less than or equal to 200 $\mu$m, specifically greater than or equal to 10 $\mu$m and less than or equal to 200 $\mu$m, and more specifically greater than or equal to 10 $\mu$m and less than or equal to 100 $\mu$m.

The polymer electrolyte membrane according to the present specification has an advantage of exhibiting favorable mechanical strength. Specifically, the polymer electrolyte membrane according to the present specification exhibits favorable mechanical strength since any one bismuth cation forms an ionic bond with two or more sulfonate anions to form cross-linkage.

In a flow battery, a crossover phenomenon in which an electrode active material included in an electrolyte liquid permeates a polymer electrolyte membrane and membrane permeates to an opposite electrode may occur. In this case, ion concentration and balance of vanadium redox ion species between both electrodes are destroyed, and battery capacity and efficiency decrease.

In addition, in a low temperature-type fuel cell such as a direct methanol fuel cell (DMFC) and a proton exchange membrane fuel cell (PEMFC), a crossover phenomenon in which a fuel electrode active material permeates a polymer electrolyte membrane may occur. Such a phenomenon reduces an oxidation/reduction ability of a counter electrode and forms an overvoltage, which reduces battery capacity and efficiency.

Meanwhile, in the polymer electrolyte membrane, cross-linkage formed by any one bismuth cation forming an ionic bond with two or more sulfonate anions controls an ion conducting channel size of the polymer electrolyte membrane, and therefore, an effect of preventing a crossover of an electrode active material that is larger than hydrogen ions is obtained.

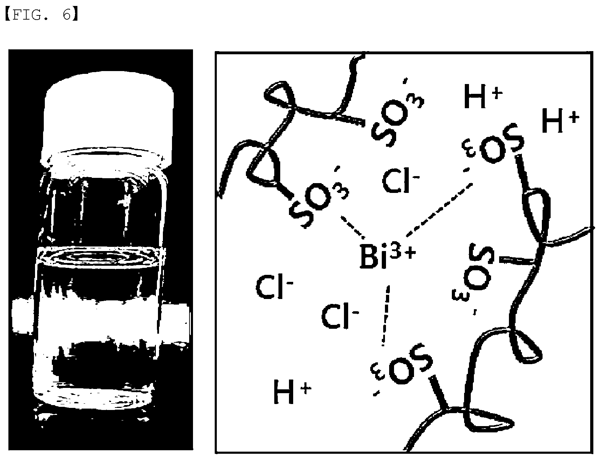

The polymer electrolyte membrane according to the present specification has an advantage of exhibiting favorable ion conductivity. The bismuth salt in the polymer electrolyte membrane is present in an ion state, and thereby enhances ion conductivity of the polymer electrolyte membrane. Herein, ion conductivity of the polymer electrolyte membrane is proportional to the number of ions, and therefore, as in FIG. 6, the bismuth salt in the polymer electrolyte membrane is dissociated and present in an ion state, and ion conductivity increases as the number of ions increases.

When bismuth metal or bismuth oxide is present in the polymer electrolyte membrane, bismuth ions are not produced therefrom since bismuth metal particle or bismuth oxide is stable itself.

When adding a bismuth salt to a solvent with the ion conducting polymer in order to use bismuth ions in the polymer electrolyte membrane as in FIG. 6, all are dissolved and become transparent, and cross-linkage is formed by exchanging ions with a functional group of the ion conducting polymer as in the right-side mimetic diagram.

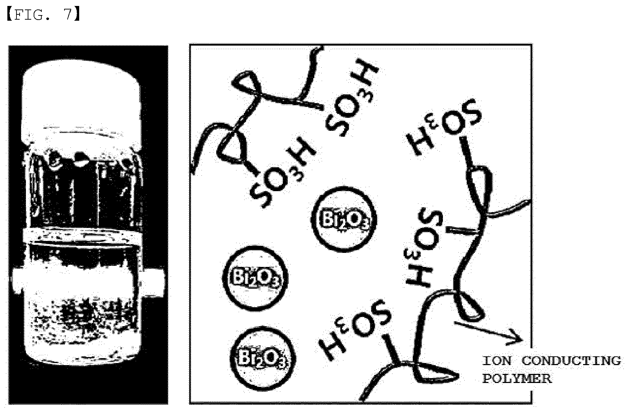

However, when adding bismuth oxide to a solvent together with the ion conducting polymer as in FIG. 7, it is identified that the bismuth oxide is not dissolved in the solvent, and aggregates and sinks down to the bottom. Since the bismuth oxide is not dissolved in the solvent, the polymer electrolyte membrane needs to be formed by dispersing the bismuth oxide through a process of sonication or stirring, and in this case, the bismuth oxide is present without any bonding in the ion conducting polymer channel as in the right-side mimetic diagram of FIG. 7. In this case, the bismuth oxide is simply mixed in the polymer electrolyte membrane, and the bismuth oxide present on the surface is readily washed away to an electrolyte liquid preventing a flow of the electrolyte liquid, or declining battery performance by functioning as a foreign substance in the electrolyte liquid. In addition, the bismuth oxide present inside is like an inorganic layer irrelevant to ion conduction is present inside, and therefore, ion conductivity of the polymer electrolyte membrane decreases.

The present specification provides an electrochemical battery including an anode, a cathode, and the polymer electrolyte membrane described above provided between the anode and the cathode.

The cathode is an electrode reduced by receiving electrons when discharged, and may perform a role of an anode (oxidation electrode) releasing electrons by an oxidation when charged. The anode is an electrode releasing electrons by being oxidized when discharged, and may perform a role of a cathode (reduction electrode) reduced by receiving electrons when charged.

The electrochemical battery means a battery using a chemical reaction, and the type is not particularly limited as long as a polymer electrolyte membrane is provided, however, the electrochemical battery may be, for example, a fuel cell, a metal secondary battery or a flow battery.

The present specification provides a flow battery including an anode in which an anode electrolyte liquid including an anode active material is injected and discharged; a cathode in which a cathode electrolyte liquid including a cathode active material is injected and discharged; and the polymer electrolyte membrane described above disposed between the anode and the cathode.

The flow battery of the present specification may further include an anode tank and a cathode tank storing an anode electrolyte liquid or a cathode electrolyte liquid, respectively; a pump supplying the electrolyte liquids to an anode or a cathode by being connected to the anode tank and the cathode tank; an anode inlet (31) and a cathode inlet (32) inflowing the anode electrolyte liquid or the cathode electrolyte liquid, respectively, from the pump; and an anode outlet (41) and an cathode outlet (42) discharging the electrolyte liquids from the anode (21) or the cathode (22) to the anode tank and the cathode tank, respectively.

The shape of the flow battery is not limited, and examples thereof may include a coin-type, a flat plate-type, a cylinder-type, a horn-type, a button-type, a sheet-type or a laminate-type.

The anode means a region capable of charging and discharging electric energy by chemically reacting while the anode electrolyte liquid is injected and discharged from the tank, and the cathode means a region capable of charging and discharging electric energy by chemically reacting while the cathode electrolyte liquid is injected and discharged from the tank.

The anode electrolyte liquid may include an anode active material, and the cathode electrolyte liquid may include a cathode active material.

The cathode active material means a material reduced by receiving electrons when discharged and releasing electrons by being oxidized when charged, and the anode active material means a material releasing electrons by being oxidized when discharged, and reduced by receiving electrons when charged.

Types of the flow battery may be divided depending on the electrode active material type, and for example, the flow battery may be, depending on the electrode active material type, divided into a vanadium-based flow battery, a lead-based flow battery, a polysulfide bromine (PSB) flow battery, a zinc-bromine (Zn-Br) flow battery and the like.

The electrode active material may be selected from among general materials used in the art.

In one embodiment of the present specification, the flow battery may use a V(IV)/V(V) couple as the cathode active material, and may use a V(II)/V(III) couple as the anode active material.

In another embodiment of the present specification, the flow battery may use a halogen redox couple as the cathode active material, and may use a V(II)/V(III) redox couple as the anode active material.

In still another embodiment of the present specification, the flow battery may use a halogen redox couple as the cathode active material, and may use a sulfide redox couple as the anode active material.

In still another embodiment of the present specification, the flow battery may use a halogen redox couple as the cathode active material, and may use a zinc (Zn) redox couple as the anode active material.

In a vanadium flow battery, a molar concentration of the electrode active material may be greater than or equal to 0.5 M and less than or equal to 4 M. In other words, a molar number of the electrode active material dissolved in 1 liter of the electrolyte liquid may be greater than or equal to 0.5 mol and less than or equal to 4 mol. When a molar concentration of the electrode active material is greater than 4 M, stability of the electrode active material decreases at a temperature of 50°C or lower, and precipitates may be formed.

The anode electrolyte liquid and the cathode electrolyte liquid may each independently include a bismuth salt. The bismuth salt means a salt dissociated into a bismuth cation while being dissolved in a solvent.

The bismuth salt may include at least one of bismuth nitrate, bismuth chloride, bismuth sulfide, bismuth sulfate, bismuth carbonate and bismuth hydroxide.

When the anode electrolyte liquid includes a bismuth salt, a molar concentration of the bismuth salt in the anode electrolyte liquid may be greater than or equal to 0.001 M and less than or equal to 0.1 M. In other words, a molar number of the bismuth salt dissolved in 1 liter of the anode electrolyte liquid may be greater than or equal to 0.001 mol and less than or equal to 0.1 mol.

When the cathode electrolyte liquid includes a bismuth salt, a molar concentration of the bismuth salt in the cathode electrolyte liquid may be greater than or equal to 0.001 M and less than or equal to 0.1 M. In other words, a molar number of the bismuth salt dissolved in 1 liter of the cathode electrolyte liquid may be greater than or equal to 0.001 mol and less than or equal to 0.1 mol.

The anode electrolyte liquid and the cathode electrolyte liquid may each further include a solvent.

The solvent is not particularly limited as long as it is capable of dissolving the electrode active material, and in a vanadium flow battery in which the cathode active material is a V(IV)/V(V) redox couple and the anode active material is a V(II)/V(III) redox couple, the solvent capable of dissolving the active material may include, for example, an aqueous sulfuric acid solution, an aqueous hydrochloric acid solution, an aqueous phosphoric acid solution and a mixed solution thereof.

A molar concentration of the acid in the aqueous sulfuric acid solution, the aqueous hydrochloric acid solution, the aqueous phosphoric acid solution or a mixed solution thereof may be greater than or equal to 2 M and less than or equal to 4 M. In other words, a molar number of the acid in 1 liter of the electrolyte liquid may be greater than or equal to 2 mol and less than or equal to 4 mol. Herein, the acid means sulfuric acid, hydrochloric acid, phosphoric acid or a mixture thereof, and the aqueous sulfuric acid solution, the aqueous hydrochloric acid solution, the aqueous phosphoric acid solution or a mixed solution thereof refers to adding sulfuric acid, hydrochloric acid, phosphoric acid or a mixture thereof, respectively, to distilled water.

The anode and the cathode may each include a porous support.

Specifically, a porous support may be provided in each of the anode and the cathode. In other words, the anode and the cathode may each be filled with a porous support.

The porous support may include a porous metal including at least one of Au, Sn, Ti, Pt-Ti and IrO-Ti; or porous carbon including at least one of carbon paper, carbon nanotubes, graphite felt and carbon felt.

The present specification provides a battery module including the flow battery described above as a unit cell.

The electrochemical battery module may be formed through stacking using a bipolar plate inserted between the flow batteries according to one embodiment of the present specification.

The battery module may specifically be used as a power supply of electric vehicles, hybrid electric vehicles, plug-in hybrid electric vehicles or power storage systems.

The present specification provides a composition for a polymer electrolyte membrane including a bismuth salt, an ion conducting polymer having an ion conducting functional group represented by the following Chemical Formula 1, and a solvent, wherein a content of the bismuth salt is greater than or equal to 4% by weight and less than or equal to 10% by weight based on a total weight of the ion conducting polymer having the ion conducting functional group.

[Chemical Formula 1]          $-SO_3^-X$

In Chemical Formula 1, X is a cation.

Based on a total weight of the ion conducting polymer having the ion conducting functional group, a content of the bismuth salt may be greater than or equal to 4% by weight and less than or equal to 10% by weight. In this case, the bismuth salt is sufficiently dissolved in the solvent leading to an advantage of inducing an ionic bond between the bismuth cation present in an ionic state and a sulfonate anion of the polymer.

Based on a total weight of the ion conducting polymer having the ion conducting functional group, a content of the bismuth salt may be greater than or equal to 5% by weight and less than or equal to 8% by weight. This is a content of one bismuth ion capable of bonding per 3 sulfonate ions, and there is an advantage in that mechanical properties are enhanced due to a crosslinking effect, a crossover is prevented, and the risk of being washed away to the electrolyte liquid is low since the bismuth cation is strongly linked with 3 ionic bonds in the polymer electrolyte.

Based on a total weight of the composition for a polymer electrolyte membrane, a content of the bismuth salt may be greater than or equal to 0.0005% by weight and less than or equal to 4% by weight.

The bismuth salt may include at least one of bismuth nitrate, bismuth chloride, bismuth sulfide, bismuth sulfate, bismuth carbonate and bismuth hydroxide.

The ion conducting polymer is not particularly limited as long as it has the ion conducting functional group represented by Chemical Formula 1.

The ion conducting polymer may be a hydrocarbon-based polymer, a partial fluorine-based polymer or a fluorine-based polymer.

The hydrocarbon-based polymer may be a hydrocarbon-based sulfonated polymer without a fluorine group, and on the contrary, the fluorine-based polymer may be a sulfonated polymer saturated with a fluorine group, and the partial fluorine-based polymer may be a sulfonated polymer that is not saturated with a fluorine group.

The ion conducting polymer may cite the descriptions provided above in the polymer electrolyte membrane.

Based on a total weight of the composition for a polymer electrolyte membrane, a content of the ion conducting polymer may be greater than or equal to 5% by weight and less than or equal to 40% by weight. This has advantages in that the polymer electrolyte membrane may be uniformly film-formed, and solubility of the bismuth salt is enhanced due to a proper ratio with the bismuth salt.

Based on a total weight of the composition for a polymer electrolyte membrane, a content of the ion conducting polymer may be greater than or equal to 10% by weight and less than or equal to 30% by weight, and specifically, may be greater than or equal to 15% by weight and less than or equal to 25% by weight.

Types of the solvent are not particularly limited as long as the solvent is capable of dissolving the bismuth salt and the ion conducting polymer, and those generally used in the art may be employed.

Based on a total weight of the composition for a polymer electrolyte membrane, a content of the solvent may be greater than or equal to 56% by weight and less than or equal to 94.9995% by weight. This has advantages in that optimal viscosity for film-forming of the polymer electrolyte membrane is secured, and solubility of the bismuth salt and the ion conducting polymer increases.

Based on a total weight of the composition for a polymer electrolyte membrane, a content of the solvent may be greater than or equal to 70% by weight and less than or equal to 90% by weight, and specifically, may be greater than or equal to 75% by weight and less than or equal to 85% by weight.

The composition for a polymer electrolyte membrane may further include an acid. The acid may be added for dissolving the bismuth salt. Types of the acid are not particularly limited, however, the acid may be sulfuric acid, hydrochloric acid, phosphoric acid or a mixture thereof.

A molar concentration of the acid may be greater than or equal to 0.1 M and less than or equal to 0.5 M. This helps the bismuth salt be favorably dissolved in the solvent, and may help the dissociated bismuth ion form an ionic bond with a sulfonate ion by ion exchanging with the ion conducting functional group of the ion conducting polymer.

The present specification provides a method for preparing a polymer electrolyte membrane including preparing a polymer electrolyte membrane using a composition including a bismuth salt, an ion conducting polymer having an ion conducting functional group represented by the following Chemical Formula 1, and a solvent, wherein a content of the bismuth salt is greater than or equal to 40.01% by weight and less than or equal to 10% by weight based on a total weight of the ion conducting polymer having the ion conducting functional group.

[Chemical Formula 1]          $-SO_3^-X$

In Chemical Formula 1, X is a cation.

In Chemical Formula 1, X may be a monovalent cation, a divalent cation or a trivalent cation. When X is a monovalent cation, H+, Na+ and the like may be included, and when X is a divalent cation or a trivalent cation, cross-linkage may be formed with adjacent -SO$_3$$^-$ through the divalent cation or the trivalent cation.

As for the method for preparing a polymer electrolyte membrane, the polymer electrolyte membrane may be prepared by coating the composition on a substrate and then drying the result, or the polymer electrolyte membrane may be prepared by impregnating the composition into a porous body and then drying the result.

The method for preparing a polymer electrolyte membrane may cite the descriptions provided above in the polymer electrolyte membrane.

Hereinafter, the present specification will be described in more detail with reference to examples. However, the following examples are for illustrative purposes only, and is not to limit the present specification.

[Example]

[Example 1]

Based on a weight of the whole solution, 25% by weight of Nafion, 1.25% by weight of BiCl$_3$ (based on sulfonic acid of Nafion, equivalents of BiCl$_3$ was 0.25 equivalents, 5% by weight with respect to Nafion) and 5% by weight of a 0.5 M aqueous sulfuric acid solution based on a weight of the whole solution were added to a remaining solvent (68.75% by weight), and the result was mixed for one day at room temperature.

The mixed solution was casted on a PET film, the result was dried for 3 days at 80°C to prepare a polymer electrolyte membrane having a thickness of 50 $\mu$m.

[Comparative Example 1]

Based on a weight of the whole solution, 25% by weight of Nafion, 0.25% by weight of BiCl$_3$ (based on sulfonic acid of Nafion, equivalents of BiCl$_3$ was 0.05 equivalents, 1% by weight with respect to Nafion) and 5% by weight of a 0.5 M aqueous sulfuric acid solution based on a weight of the whole solution were added to a remaining solvent (69.75% by weight), and the result was mixed for one day at room temperature.

The mixed solution was casted on a PET film, the result was dried for 3 days at 80°C to prepare a polymer electrolyte membrane having a thickness of 50 $\mu$m.

[Comparative Example 2]

A polymer electrolyte membrane having a thickness of 50 $\mu$m or 125 $\mu$m was prepared in the same manner as in Example 1 except that BiCl$_3$ was not used.

[Experimental Example 1]

Using a commercial electrolyte liquid (1.6 M V$^{3.5+}$, 2 M aqueous H$_2$SO$_4$ solution) of Oxkem Limited, a flow battery using each of the polymer electrolyte membranes of Example 1 and Comparative Example 2 in a flow battery having an active area of 5 cm$^2$×5 cm$^2$ and a flow rate of 10 ml/min was manufactured.

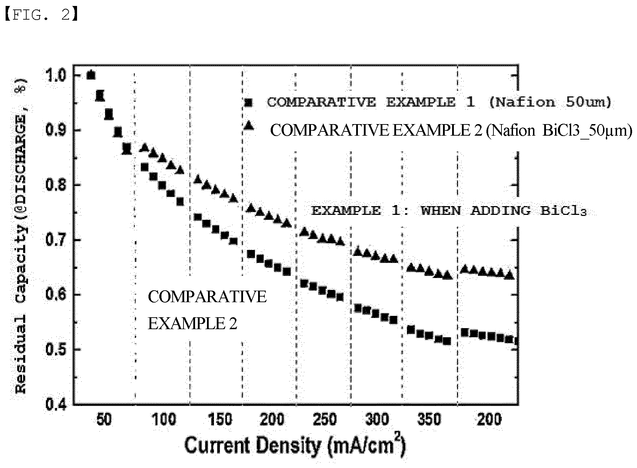

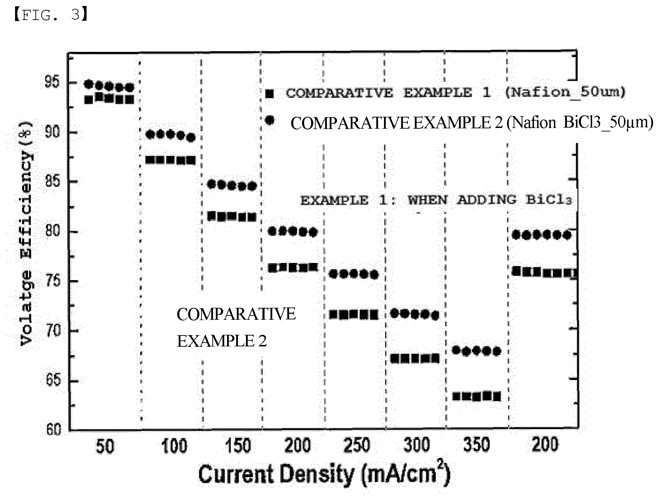

Battery capacity and efficiency for the flow battery were measured at current density of 50 mA/cm$^2$ to 350 mA/cm$^2$. The results are presented in FIG. 2 and FIG. 3.

Through FIG. 2 and FIG. 3, it was seen that a capacity decrease rate was lower in Example 1 than in Comparative Example 2, and voltage efficiency was more enhanced in Example 1 than in Comparative Example 2 due to an enhancement in the ion conductivity of a separator.

[Experimental Example 2]

Measurement of Vanadium Permeability

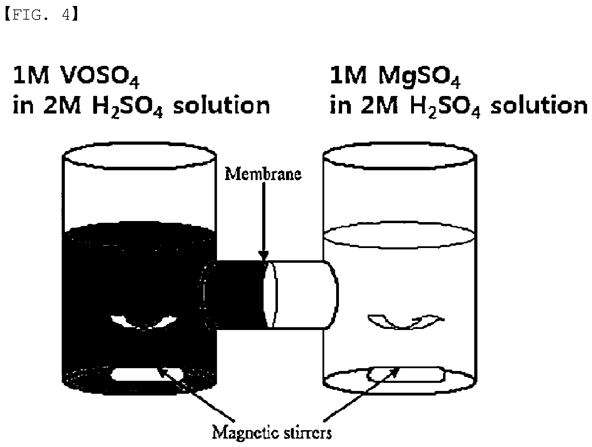

Each of the polymer electrolyte membranes of Examples 1 and Comparative Examples 1 and 2 having a thickness of 125 $\mu$m was inserted between a permeability measuring kit as in FIG. 4, and a solution adding 1 M vanadyl sulfate (VOSO$_4$) to a 2 M aqueous sulfuric acid solution was introduced on one side, and on the other side, a solution adding 1 M magnesium sulfate (MgSO$_4$) to a 2 M aqueous sulfuric acid solution was introduced.

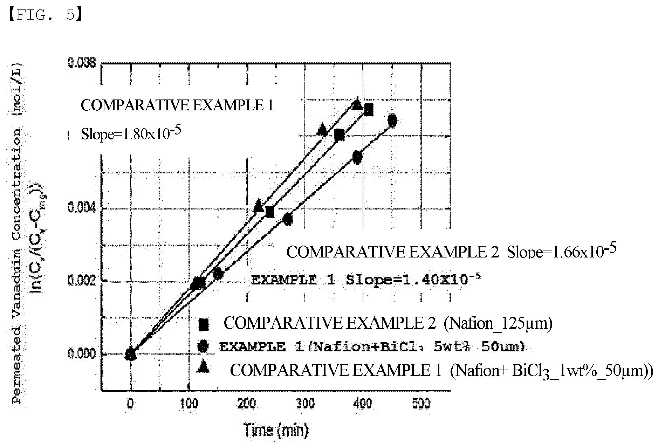

The concentration of vanadium ions permeating the polymer electrolyte membrane to the magnesium sulfate-added solution side was measured over time, and is presented in FIG. 5.

Vanadium ion permeability was calculated by substituting the data of FIG. 5 and Table 1 into the following Equation 1.

[Equation 1]

$$\ln\left(\frac{C_A}{C_A - C_B}\right) = \frac{DA}{V_B L} t$$

D: diffusion coefficients of vanadium ions ($cm^2$ $min^{-1}$)
A: effective area of the membrane ($cm^2$)
L: thickness of the membrane (cm)
V (=$V_{Mg}$): volume of the solution ($cm^3$)
$C_A$ (=$C_v$): concentration of vanadium ions in enrichment side (mol $L^{-1}$)
$C_B$ (=$C_{Mg}$): concentration of vanadium ions in deficiency side (mol $L^{-1}$)
t: test time

[Assumptions]

1) $V_B$ (volume of deficiency side)=constant
2) $C_A$ (value of employing a large volume of solution)=constant

[Table 1]

|  | Slope | L | A | $V_{Mg}$ | D |
|---|---|---|---|---|---|
|  |  | cm | $cm^2$ | $cm^3$ | $cm^2$/min |
| Comparative Example 2 | 1.66E-05 | 0.0125 | 7.69 | 190 | 5.12E-06 |
| Example 1 | 1.40E-05 | 0.005 | 7.69 | 200 | 1.83E-06 |
| Comparative Example 1 | 1.80E-05 | 0.005 | 7.69 | 200 | 2.34E-06 |

Example 1 having bismuth ions forming ionic bonds with sulfonate ions had vanadium ion permeability decreased by approximately 36% compared to Comparative Example 2. Through this, it was seen that bismuth ions forming ionic bonds with sulfonate ions reduced a vanadium ion crossover.

[Experimental Example 3]

A solution adding 5% by weight of $BiCl_3$ to a 0.5 M aqueous sulfuric acid solution (Preparation Example 1) and a solution adding 5% by weight of bismuth oxide to a 0.5 M aqueous sulfuric acid solution (Preparation Example 2) were illustrated in FIG. 6 and FIG. 7, respectively.
It was seen that $BiCl_3$ was dissolved in the solvent in the solution of Preparation Example 1, however, bismuth oxide was not dissolved in the solvent and sank down to the bottom in the solution of Preparation Example 2.

**Claims**

1. A polymer electrolyte membrane comprising a sulfonate anion ($-SO_3^-$), wherein the sulfonate anion forms an ionic bond with a bismuth cation, wherein a content of the bismuth cation is greater than or equal to 0.2 equivalents and less than or equal to 0.5 equivalents with respect to the sulfonate anion.

2. The polymer electrolyte membrane of Claim 1, wherein any one of the bismuth cations forms cross-linkage by forming an ionic bond with two or more of the sulfonate anions.

3. An electrochemical battery comprising:

an anode;
a cathode; and
the polymer electrolyte membrane of any one of Claims 1 and 2 provided between the anode and the cathode.

4. A flow battery comprising:

an anode in which an anode electrolyte liquid including an anode active material is injected and discharged;
a cathode in which a cathode electrolyte liquid including a cathode active material is injected and discharged; and
the polymer electrolyte membrane of any one of Claims 1 and 2 disposed between the anode and the cathode.

5. The flow battery of Claim 4, wherein the anode electrolyte liquid and the cathode electrolyte liquid each independently include a bismuth salt.

6. A battery module comprising the flow battery of Claim 4 as a unit cell.

7. A composition for a polymer electrolyte membrane comprising:

a bismuth salt;
an ion conducting polymer having an ion conducting functional group represented by the following Chemical Formula 1; and
a solvent:

[Chemical Formula 1]        $-SO_3^-X$

in Chemical Formula 1, X is a cation,
wherein a content of the bismuth salt is greater than or equal to 4% by weight and less than or equal to 10% by weight based on a total weight of the ion conducting polymer having the ion conducting functional group.

8. The composition for a polymer electrolyte membrane of Claim 8, wherein the bismuth salt includes at least one of bismuth nitrate, bismuth chloride, bismuth sulfide, bismuth sulfate, bismuth carbonate and bismuth hydroxide.

9. The composition for a polymer electrolyte membrane of Claim 7, further comprising an acid.

10. The composition for a polymer electrolyte membrane of Claim 9, wherein a molar concentration of the acid is greater than or equal to 0.1 M and less than or equal to 0.5 M.

11. A method for preparing a polymer electrolyte membrane comprising:

preparing a polymer electrolyte membrane using a composition including a bismuth salt, an ion conducting polymer having an ion conducting functional group represented by the following Chemical Formula 1, and a solvent,
wherein a content of the bismuth salt is greater than or equal to 4% by weight and less than or equal to 10% by weight based on a total weight of the ion conducting polymer having the ion conducting functional group:

[Chemical Formula 1]        $-SO_3^-X$

wherein, in Chemical Formula 1, X is a cation.

**Patentansprüche**

1. Polymerelektrolytmembran, umfassend ein Sulfonat-Anion ($-SO_3^-$), worin das Sulfonat-Anion eine Ionenbindung mit einem Wismut-Kation bildet, worin die Menge des Wismut-Kations größer als oder gleich 0,2 Äquivalente und kleiner als oder gleich 0,5 Äquivalente ist, bezogen auf das Sulfonat-Anion.

2. Polymerelektrolytmembran gemäß Anspruch 1, worin irgendeines der Wismut-Kationen eine Vernetzung durch Bilden einer Ionenbindung mit zwei oder mehr der Sulfonat-Anionen bildet.

**3.** Elektrochemische Batterie, umfassend:

eine Anode;
eine Kathode; und
die Polymerelektrolytmembran gemäß irgendeinem der Ansprüche 1 und 2, vorgesehen zwischen der Anode und der Kathode.

**4.** Durchflussbatterie, umfassend:

eine Anode, worin eine Anoden-Elektrolytflüssigkeit, die ein Anoden-Aktivmaterial enthält, eingeführt und ausgeführt wird;
eine Kathode, worin eine Kathoden-Elektrolytflüssigkeit, die ein Kathoden-Aktivmaterial umfasst, eingeführt und ausgeführt wird; und
die Polymerelektrolytmembran gemäß irgendeinem der Ansprüche 1 und 2, vorgesehen zwischen der Anode und der Kathode.

**5.** Durchflussbatterie gemäß Anspruch 4, worin die Anoden-Elektrolytflüssigkeit und die Kathoden-Elektrolytflüssigkeit jeweils unabhängig ein Wismutsalz umfassen.

**6.** Batteriemodul, umfassend die Durchflussbatterie gemäß Anspruch 4 als Einheitszelle.

**7.** Zusammensetzung für eine Polymerelektrolytmembran, umfassend:

ein Wismutsalz;
ein ionenleitendes Polymer mit einer ionenleitenden funktionellen Gruppe, dargestellt durch die folgende chemische Formel 1; und ein Lösungsmittel:

[Chemische Formel 1] $\quad -SO_3^-X$

worin in der chemischen Formel 1 X ein Kation ist,
worin die Menge des Wismutsalzes größer ist als oder gleich 4 Gew.-% und kleiner als oder gleich 10 Gew.-%, bezogen auf das Gesamtgewicht des ionenleitenden Polymers mit der ionenleitenden funktionellen Gruppe.

**8.** Zusammensetzung für eine Polymerelektrolytmembran gemäß Anspruch 8, worin das Wismutsalz mindestens eines von Wismutnitrat, Wismutchlorid, Wismutsulfid, Wismutsulfat, Wismutcarbonat und Wismuthydroxid umfasst.

**9.** Zusammensetzung für eine Polymerelektrolytmembran gemäß Anspruch 7, ferner umfassend eine Säure.

**10.** Zusammensetzung für eine Polymerelektrolytmembran gemäß Anspruch 9, worin die molare Konzentration der Säure größer ist als oder gleich zu 0,1 M und kleiner als oder gleich zu 0,5 M.

**11.** Verfahren zur Herstellung einer Polymerelektrolytmembran, umfassend

Zubereiten einer Polymerelektrolytmembran unter Verwendung einer Zusammensetzung, die ein Wismutsalz, ein ionenleitendes Polymer mit einer durch die folgende chemische Formel 1 dargestellten ionenleitenden funktionellen Gruppe, und ein Lösungsmittel umfasst,
worin der Mengenanteil des Wismutsalzes größer als oder gleich zu 4 Gew.-% und kleiner als oder gleich zu 10 Gew.-% ist, bezogen auf das Gesamtgewicht des ionenleitenden Polymers mit der ionenleitenden funktionellen Gruppe:

[Chemische Formel 1] $\quad -SO_3^-X$

worin in der chemischen Formel 1 X ein Kation ist.

**Revendications**

**1.** Membrane électrolytique polymère comprenant un anion sulfonate ($-SO_3^-$), dans laquelle l'anion sulfonate forme une liaison ionique avec un cation bismuth, dans laquelle une teneur du cation bismuth est supérieure ou égale à 0,2 équivalent et inférieure ou égale à 0,5 équivalent par rapport à l'anion sulfonate.

2. Membrane électrolytique polymère selon la revendication 1, dans laquelle l'un quelconque des cations bismuth forme une réticulation en formant une liaison ionique avec deux des anions sulfonate ou plus.

3. Batterie électrochimique comprenant :

une anode ;
une cathode ; et
la membrane électrolytique polymère selon l'une quelconque des revendications 1 et 2 prévue entre l'anode et la cathode.

4. Batterie à circulation comprenant :

une anode dans laquelle un liquide d'électrolyte d'anode incluant un matériau actif d'anode est injecté et déchargé ;
une cathode dans laquelle un liquide d'électrolyte de cathode incluant un matériau actif de cathode est injecté et déchargé ; et
la membrane électrolytique polymère selon l'une quelconque des revendications 1 et 2 disposée entre l'anode et la cathode.

5. Batterie à circulation selon la revendication 4, dans laquelle le liquide d'électrolyte d'anode et le liquide d'électrolyte de cathode incluent chacun indépendamment un sel de bismuth.

6. Module de batterie comprenant la batterie à circulation de la revendication 4 en tant que cellule unitaire.

7. Composition pour une membrane électrolytique polymère comprenant :

un sel de bismuth ;
un polymère conducteur d'ions présentant un groupe fonctionnel conducteur d'ions représenté par la formule chimique 1 suivante ; et
un solvant :

$$[\text{Formule chimique 1}] \qquad -SO_3^-X$$

dans la formule chimique 1, X est un cation,
dans laquelle une teneur du sel de bismuth est supérieure ou égale à 4 % en poids et inférieure ou égale à 10 % en poids sur la base d'un poids total du polymère conducteur d'ions présentant le groupe fonctionnel conducteur d'ions.

8. Composition pour une membrane électrolytique polymère selon la revendication 8, dans laquelle le sel de bismuth inclut au moins un parmi le nitrate de bismuth, le chlorure de bismuth, le sulfure de bismuth, le sulfate de bismuth, le carbonate de bismuth et l'hydroxyde de bismuth.

9. Composition pour une membrane électrolytique polymère selon la revendication 7, comprenant en outre un acide.

10. Composition pour membrane électrolytique polymère selon la revendication 9, dans laquelle une concentration molaire de l'acide est supérieure ou égale à 0,1 M et inférieure ou égale à 0,5 M.

11. Procédé de préparation d'une membrane électrolytique polymère comprenant les étapes consistant à :

préparer une membrane électrolytique polymère en utilisant une composition incluant un sel de bismuth, un polymère conducteur d'ions présentant un groupe fonctionnel conducteur d'ions représenté par la formule chimique 1 suivante, et un solvant,
dans lequel une teneur du sel de bismuth est supérieure ou égale à 4 % en poids et inférieure ou égale à 10 % en poids sur la base d'un poids total du polymère conducteur d'ions présentant le groupe fonctionnel conducteur d'ions :

[Formule chimique 1]                    $-SO_3^-X$

dans lequel, dans la formule chimique 1, X est un cation.

【FIG. 1】

【FIG. 2】

【FIG. 3】

【FIG. 4】

**1M VOSO$_4$
in 2M H$_2$SO$_4$ solution**

**1M MgSO$_4$
in 2M H$_2$SO$_4$ solution**

Membrane

Magnetic stirrers

【FIG. 5】

【FIG. 6】

【FIG. 7】

ION CONDUCTING POLYMER

**EP 3 579 250 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014134519 A1
- JP 2012169041 A
- US 2016013506 A1